Europäisches Patentamt

European Patent Office

Office européen des brevets

(11) Publication number: **0 428 742 A1**

# EUROPEAN PATENT APPLICATION
## published in accordance with Art. 158(3) EPC

(21) Application number: 90907432.0

(22) Date of filing: 11.05.90

(86) International application number:
PCT/JP90/00601

(87) International publication number:
WO 90/13867 (15.11.90 90/26)

(51) Int. Cl.⁵: $G05D\ 3/12$, $G05B\ 13/04$

(30) Priority: 12.05.89 JP 117517/89

(43) Date of publication of application:
29.05.91 Bulletin 91/22

(84) Designated Contracting States:
DE FR GB

(71) Applicant: FANUC LTD.
3580, Shibokusa Aza-Komamba Oshino-mura
Minamitsuru-gun, Yamanashi 401-05(JP)

(72) Inventor: TORII, Nobutoshi Room 308
Fuyohaitsu 65-4, Takakura-cho
Hachioji-shi Tokyo 192(JP)

Inventor: NIHEI, R R. 7-201
F. Manshonharimomi 3539-1, Shibokusa,
Oshino-mura
Minamitsuru-gun Yamanashi 401-05(JP)
Inventor: KATO, T R. 8-101
F, Manshonharimomi 3511-1, Shibokusa,
Oshino-mura
Minamitsuru-gun Yamanashi 401-05(JP)

(74) Representative: Billington, Lawrence Emlyn et
al
Haseltine Lake & Co Hazlitt House 28,
Southampton Buildings Chancery Lane
London WC2A 1AT(GB)

(54) METHOD OF SLIDING MODE CONTROL.

(57) A method of sliding mode control which decreases the steady deviation from the control target and which improves control stability by adapting the control system to a change in the system parameter. The processor in a digital servo circuit of the servo control system calculates position deviation ($\epsilon$), speed deviation ($\dot{\epsilon}$), a value of the switch-over plane (s) and a value of an integration element

$$\textcircled{1}((\dot{\epsilon} + C.\epsilon))$$

on the switch-over plane (100 to 102, 107, 113) based on an instructed position ($\theta r$) and an actual position ($\theta$). The processor further calculates a first term and a second term of switch-over quantity (T1) according to a calculation formula determined depending upon the switch-over plane, position deviation and positive or negative sign to which the value of the integration element is corresponded (103 to 115). Then, based on a calculated value of switch-over quantity (T1) that is equal to the sum of the first and second terms and that satisfies the Liapunov stabilization condition, a torque instruction (T) is calculated that is sufficient to converge the characteristics of the control system to the switch-over plane (s = 0). As a result, the control system does not lose stability even when the system parameters undergo a change.

Xerox Copy Centre

FIG.3

# SLIDING MODE CONTROL METHOD

## Technical Field

The present invention relates to a sliding mode control method, and more particularly, to a sliding mode control method capable of reducing a steady-state deviation and improving control stability.

## Background Art

In general, a conventional control system for controlling the drive of a robot, machine tool, etc. performs proportional-plus-integral control using a fixed control gain. In this case, if a system parameter (e.g., inertia, dynamical friction, static friction, or gravitational term of the robot) greatly varies, a response characteristic of the control system becomes unfit, and thus control stability is ruined. To eliminate such an inconvenience, sliding mode control, adaptive control, etc. have recently been proposed. According to the conventional sliding mode control, however, a steady-state deviation from a control target is likely to occur during operation or at stoppage of a controlled object. If a parameter unexpectedly varies to a great extent, moreover, the control system is likely to operate in an uncontrollable manner. Therefore, the conventional sliding mode control is poor in practicality.

## Disclosure of the Invention

An object of the present invention is to provide a sliding mode control method capable of reducing the steady-state deviation from a control target and making a control system fit for variations in system parameters, thereby improving control stability.

To achieve the above object, according to the present invention, a sliding mode control method comprises the steps of: (a) setting a switching plane containing an integral element; and (b) calculating a control output which permits a characteristic of a control system to be converged on the switching plane.

According to the present invention, as described above, the control output which permits the characteristic of the control system to be converged on the switching plane containing the integral element is calculated, whereby no steady-state deviation from a control target is caused during operation or at stoppage of a controlled object. Even if a system parameter unexpectedly varies to a great extent, the characteristic of the control system can be adapted for the parameter variation, and thus the control stability is improved. Accordingly, practical sliding mode control can be achieved.

## Brief Description of the Drawings

Fig. 1 is a block diagram showing a servomotor control system to which is applied a sliding mode control method according to one embodiment of the present invention;

Fig. 2 is a schematic block diagram illustrating a digital servo control system for embodying the sliding mode control method of the embodiment; and

Fig. 3 is a flowchart showing a sliding mode control process executed by a processor of the digital servo circuit shown in Fig. 2.

## Best Mode of Carrying Out the Invention

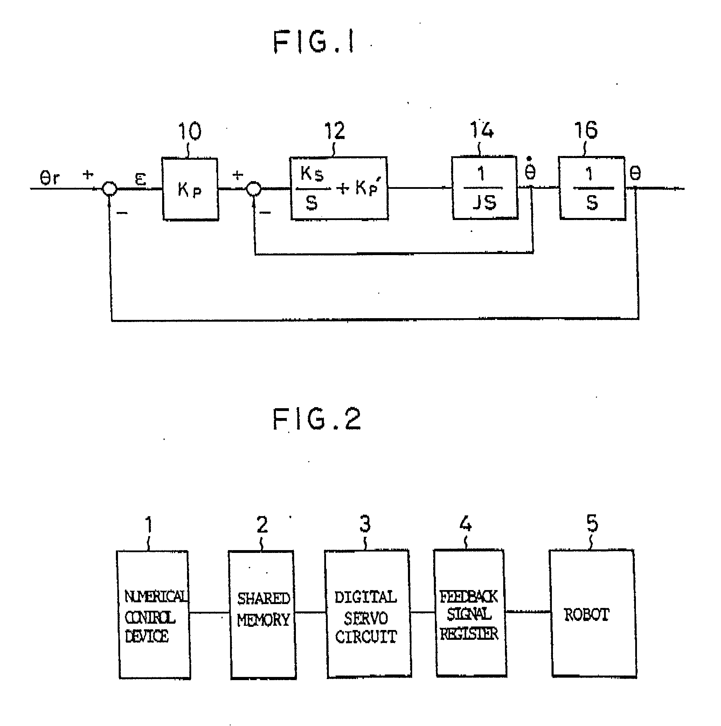

Referring to Fig. 1, a servomotor control system for a robot to which a sliding mode control method according to the present invention is applied comprises a first transfer element 10 associated with a position control loop and having a proportional gain of Kp. In this transfer element, the difference (position deviation) $\epsilon$ between a command position $\theta r$ and an actual position $\theta$ delivered from a fourth transfer element 16 is multiplied by the proportional gain Kp, to produce a command speed. Then, a torque command (control output) corresponding to the difference (speed deviation) between the command speed and an actual speed $\theta$ is derived in a second transfer element 12 associated with a speed control loop and having integral and proportional gains of Ks and Kp', respectively. A driving current corresponding to this torque command is supplied to a servomotor indicated by a third transfer element 14, so that the servomotor is rotated at the

speed $\dot{\theta}$. Symbol J denotes the inertia of the servomotor.

A sliding mode control method according to one embodiment of the present invention will now be described.

In Fig. 1, a relationship given by equation (1) is fulfilled between the input and output sides of the servomotor. In equation (1), symbol T denotes the torque command. Further, a motor control system of Fig. 1 can be expressed by equation (2), using the position deviation $\epsilon$.

$$J \cdot \ddot{\theta} = T \quad (1)$$

$$\left. \begin{array}{c} \epsilon = \theta r - \theta \\ \dot{\epsilon} = -\dot{\theta} \\ \ddot{\epsilon} = -\ddot{\theta} \end{array} \right\} \quad ---(2)$$

where $\dot{\theta}$ and $\ddot{\theta}$ represent the first and second derivatives of $\theta$, respectively, and $\dot{\epsilon}$ and $\ddot{\epsilon}$ represent the first and second derivatives of $\epsilon$, respectively.

By substituting equation (2) into equation (1), equation (3) is obtained.

$$J \cdot \ddot{\epsilon} = -T \quad (3)$$

If a switching plane s and switching input (torque command) T of the servomotor control system of Fig. 1 are expressed by equations (4) and (5), respectively, a Liapunov function V (always positive and having a minimum of 0), associated with the switching plane s and given by equation (6), uniformly converges to 0 when the derivative $\dot{V}$ thereof is negative. In other words, the characteristic of the servomotor control system converges on the switching plane (s = 0) when $\dot{V} < 0$ is fulfilled.

$$s = \dot{\epsilon} + C \cdot \epsilon + D \cdot \int(\dot{\epsilon} + C \cdot \epsilon) \quad (4)$$
$$T = J0 \cdot \omega c \cdot \dot{\epsilon} + J0 \cdot \omega c \cdot C \cdot \epsilon + T1 \quad (5)$$
$$V = (1/2) \cdot s^2 \quad (6)$$

where C, D, and $\omega c$ individually represent constants, J0 represents the predicted minimum inertia of a controlled object, e.g., a movable part of the robot, and T1 represents a switching amount (nonlinear input) described in detail later.

By substituting $\epsilon$ obtained from equations (3) and (5) into equation (7) which is obtained by differentiating both sides of equation (4), equation (8) is obtained.

$$\dot{s} = \ddot{\epsilon} + (C + D) \cdot \dot{\epsilon} + C \cdot D \cdot \epsilon \quad ---(7)$$

$$\ddot{\epsilon} = (C + D - \omega c \cdot J0/J) \cdot \dot{\epsilon} - (C \cdot D$$
$$- C \cdot \omega c \cdot J0/J) \cdot \omega - T1/J \quad ---(8)$$

Then, by substituting equation (9) obtained from equations (4) and (8) into equation (10) which is obtained by differentiating both sides of equation (6), equation (11) which indicates the derivative $\dot{V}$ of the Liapunov function is obtained.

$$\dot{s} = (C + D - \omega c \cdot J0/J) \cdot s - [C^2 \cdot \epsilon$$
$$+ (C \cdot D + D^2 - D \cdot \omega c \cdot J0/J)$$
$$\cdot \int(\dot{\epsilon} + C \cdot \epsilon) + T1/J] \quad (9)$$
$$\dot{V} = s \cdot \dot{s} \quad (10)$$
$$\dot{V} = (C + D - \omega c \cdot J0/J) \cdot s^2 - [C^2 \cdot \epsilon$$
$$+ (C \cdot D + D^2 - D \cdot \omega c \cdot J0/J) \cdot \int(\dot{\epsilon}$$
$$+ C \cdot \epsilon) + T1/J] \cdot s \quad (11)$$

Then, a condition for the relationship $\dot{V} < 0$ is obtained.

If the constant $\omega c$ is determined so that equation (12) is fulfilled, the first term of the right side of equation (11) is negative, as indicated by equation (13). In equation (12), symbol Jmax represents the

4

predicted maximum inertia of the controlled object, and the relationship Jmax/J > 1 stands.

$$\omega c = (C + D) \cdot Jmax/J0 \quad (12)$$

First Term of the Right Side of Equation (11) =
$$C + D \cdot (1 - Jmax/J0) \cdot s^2 < 0 \quad (13)$$

If the second term of equation (11) is negative, namely, if formula (14) holds, then $\dot{V} < 0$ is fulfilled.

$$-[C^2 \cdot \epsilon + (C \cdot D + D^2 - D \cdot \omega c \cdot J0/J)$$
$$\cdot \int(\dot{\epsilon} + C \cdot \epsilon) + T1/J] \cdot s < 0 \quad (14)$$

After all, to converge the characteristic of the servomotor control system on the switching plane (s = 0) for the sliding mode control, that is, to make the characteristic of the servomotor control system adapted for variations of system parameters, it is only necessary that the switching amount T1 fulfilling formula (14) be calculated, the torque command T be calculated based on the calculated switching amount T1 and in accordance with equation (5), and the servomotor be controlled by using the calculated torque command T.

To determine the switching amount T1 which fulfills the condition (formula (14)) for $\dot{V} < 0$, according to the present embodiment, the switching amount T1 is divided in two; a first term $K1(\epsilon)$ expressed as a function of the position deviation $\epsilon$, and a second term $K2(\int(\dot{\epsilon} + C \cdot \epsilon))$ expressed as a function of the integral value $\int(\dot{\epsilon} + C \cdot \epsilon)$, as indicated by equation (15). Further, the first term $K1(\epsilon)$ is calculated in accordance with a corresponding one of the calculation formulae, depending on the respective signs of the switching plane s and the position deviation $\epsilon$, and the second term $K2(\int(\dot{\epsilon} + C \cdot \epsilon))$ is calculated in accordance with a corresponding one of the calculation formulae, depending on the respective signs of the switching plane s and the integral value $\int(\dot{\epsilon} + C \cdot \epsilon)$.

$$T1 = K1(\epsilon) + K2(\int(\dot{\epsilon} + C \cdot \epsilon)) \quad (15)$$

More specifically, formula (14) holds if formula (16) holds when $s \geq 0$ or if equation (17) holds when $s < 0$.

$$T1 > -C^2 \cdot J \cdot \epsilon - [J \cdot (C \cdot D + D)^2 - D \cdot$$
$$\omega c \cdot J0] \cdot \int(\dot{\epsilon} + C \cdot \epsilon) \quad (16)$$
$$T1 < -C^2 \cdot J \cdot \epsilon - [J \cdot (C \cdot D + D)^2 - D \cdot$$
$$\omega c \cdot J0] \cdot \int(\dot{\epsilon} + C \cdot \epsilon) \quad (17)$$

Thereupon, the first term $K(\epsilon)$ of the switching amount T1 is calculated using equation (18) when $s \geq 0$ and $\epsilon \geq 0$ or when $s < 0$ and $\epsilon < 0$, and using equation (19) when $s \geq 0$ and $\epsilon < 0$ or when $s < 0$ and $\epsilon > 0$.

$$K1(\epsilon) = -C^2 \cdot J0 \cdot \epsilon \quad (18)$$
$$K1(\epsilon) = -C^2 \cdot Jmax \cdot \epsilon \quad (19)$$

Then, the second term $K2(\int(\dot{\epsilon} + C \cdot \epsilon))$ of the switching amount T1 is calculated using equation (20) when $s \geq 0$ and $\epsilon \geq 0$ or when $s < 0$ and $\epsilon < 0$, and using equation (21) when $s \geq 0$ and $\epsilon < 0$ or when $s < 0$ and $\epsilon \geq 0$.

$$K2 = (\int(\dot{\epsilon} + C \cdot \epsilon))$$
$$= -\{(C \cdot D + D^2) - D \cdot \omega c\} \cdot J0 \quad (20)$$
$$K2 = (\int(\dot{\epsilon} + C \cdot \epsilon))$$
$$= -\{(C \cdot D + D^2) \cdot Jmax - D \cdot \omega c \cdot J0\} \quad (21)$$

Further, the switching amount T1 fulfilling the condition for $\dot{V} < 0$ is obtained by calculating the sum of the first and second terms K1($\epsilon$) and K2($\int(\dot{\epsilon} + C \cdot \epsilon)$)calculated individually in the aforementioned manner, the torque command T which can make the characteristic of the servomotor control system adapted for the variations of the system parameters is calculated in accordance with equation (5) using the calculated switching amount T1, and the motor is operated in accordance with the calculated torque command T. In this case, the Liapunov stability condition ($\dot{V} < 0$) is fulfilled, and thus the characteristic of the motor control system of Fig. 1 converges on the switching plane (s = 0), and the response characteristic of the control system is determined depending on the switching plane. In other words, the stability of the control system can be maintained even if a system parameter, e.g., the inertia of the movable part of the robot, greatly varies. Since the switching plane s contains the integral element $\int(\dot{\epsilon} + C \cdot \epsilon)$,a steady-state deviation from the control target can be reduced to 0.

Referring now to Fig. 2, a digital servo (software servo) control system for carrying out the above-described sliding mode control method will be described, the system corresponding to the servomotor control system of Fig. 1.

This control system comprises a digital servo circuit 3 which is arranged to execute, on a software basis, position control, speed control, and current control of the servomotors (not shown, corresponding to the third transfer element 14 in Fig. 1) for the individual axes of the robot 5. In other words, the servo control system comprises a position control loop, a speed control loop, and a current control loop. The digital servo circuit 3 contains a digital signal processor (not shown) and a memory for storing setting values of various constants mentioned later.

Further, the servo control system comprises a shared memory (RAM) 2, which is accessible from both the processor (hereinafter referred to as first processor) of the digital servo circuit 3 and a processor (not shown, hereinafter referred to as second processor) of a host computer, e.g., a numerical control device 1 for distributing movement commands, current detectors (not shown) for detecting the actual driving current flowing through the servomotors, and servo amplifiers (not shown) for driving the servomotors for the individual axes in accordance with current commands from the digital servo circuit 3 and the outputs of the current detectors. Furthermore, the control system comprises pulse coders (not shown) mounted individually to the servomotors and corresponding to the fourth transfer element 16 in Fig. 1, a feedback signal register 4 for storing the results of the detection by the pulse coders and the current detectors under the control of the first processor, and a manual data input device (not shown) for inputting various constants.

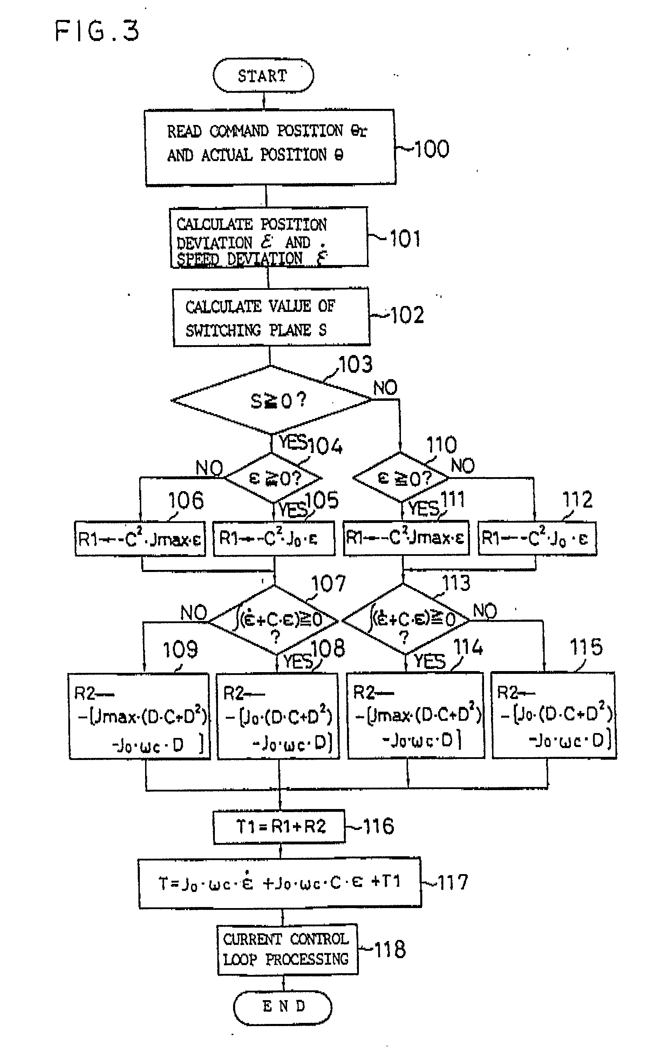

Referring now to Fig. 3, the operation of the servo control system of Fig. 2 will be described.

Before operating the robot, the aforementioned constants C, D and $\omega c$ and the respective setting values of the predicted maximum inertia Jmax and minimum inertia J0 are input through the manual data input device, and these setting values are stored in a built-in memory of the digital servo circuit 3 of the servo control system. Instead of the above manual data input, the setting values may be previously included in a program for robot control, for example.

During an operation of the robot, the first processor executes the sliding mode control process shown in Fig. 3 at intervals of the same period as the execution period for the movement command distribution by the second processor.

More specifically, the first processor first reads out from the shared RAM 2, in each control period, the command position $\theta r$ written in the shared RAM from the second processor at intervals of the movement command distribution period, and reads out the actual position $\theta$ from the feedback signal register 4 (step 100), and calculates the position deviation $\epsilon$ ( = $\theta r - \theta$) and the speed deviation $\dot{\epsilon}$ (step 101). Then, the first processor calculates the value of the switching plane s in accordance with equation (4) (step 102), and determines whether the calculated value s is positive or "0" (step 103). If it is determined that the relationship $s \geq 0$ is fulfilled, the first processor determines whether the position deviation $\epsilon$ is "0" or positive (step 104). If $\epsilon \geq 0$, the first term K1($\epsilon$) of the switching amount T1 is calculated in accordance with equation (18), and the calculated value is stored in a register R1 built in the processor (step 105). If the result of the determination in step 104 is negative ($\epsilon < 0$), the value K1($\epsilon$) is calculated using equation (19), in place of equation (18), and the calculated value is stored in the register R1 (step 106).

In step 107 following step 105 or 106, the first processor calculates the integral value $\int(\dot{\epsilon} + C \cdot \epsilon)$ associated with the switching amount T1, and determines whether the calculated value is "0" or positive. If the result of the determination in step 107 is affirmative ($\int(\dot{\epsilon} + C \cdot \epsilon) \geq 0$),the value of the second term K2($\int(\dot{\epsilon} + C \cdot \epsilon)$)of the switching amount T1 is calculated in accordance with equation (20), and the result is stored in a register R2 built in the first processor (step 108). If the result of the determination in step 107 is negative, the value of the second term K2($\int(\dot{\epsilon} + C \cdot \epsilon)$)is calculated using equation (21), in place of equation (20), and the calculated value is stored in the register R2 (step 109).

If the result of the determination in step 103 is negative ($s < 0$), the first processor calculates the value

K1($\epsilon$) in step 111 corresponding to step 106, or in step 112 corresponding to step 105, depending on the result of the determination in step 110 corresponding to step 104, namely, depending on whether the sign of the position deviation $\epsilon$ is positive or negative, and stores the calculated value in the register R1. Then, the first processor calculates the value K2($\int(\dot{\epsilon} + C \cdot \epsilon)$)in step 114 corresponding to step 109, or in step 115 corresponding to step 108, in accordance with the result of the determination in step 113 corresponding to step 107, namely, depending on whether the sign of the integral value $\int(\dot{\epsilon} + C \cdot \epsilon)$is positive or negative, and stores the calculated value in the register R2.

In step 116 following step 108, 109, 114 or 115, the first processor adds together the respective values of the first and second terms of the switching amount T1 read out respectively from the registers R1 and R2, thereby obtaining the switching amount T1 ($= K1(\epsilon) + K2(\int(\dot{\epsilon} + C \cdot \epsilon))$,and also calculates the torque command (switching input) T in accordance with equation (5) (step 117). Based on the calculated torque command T, the first processor executes the current control loop processing, and sends the resulting current command to the servo amplifiers (step 118). The servo amplifiers supply corresponding ones of the servomotors for the individual axes with driving currents which correspond to the current commands from the digital servo circuit 3 and the current detector outputs representing the actual servomotor driving currents, to thereby drive the motors concerned. Accordingly, no steady-state deviation occurs in the digital servo system during operation of the robot, and the stability of the digital servo control system can be maintained even if the inertia of the movable part of the robot, for example, greatly varies.

## Claims

1. A sliding mode control method comprising the steps of:
   (a) setting a switching plane containing an integral element; and
   (b) calculating a control output which permits a characteristic of a control system to be converged on the switching plane.

2. A sliding mode control method according to claim 1, wherein said method is applied to a control system including a speed control loop for effecting a proportional-plus-integral control to calculate a torque command, and wherein said torque command is calculated as said control output in said step (b).

3. A sliding mode control method according to claim 1, wherein said step (b) includes the steps of:
   (b1) periodically detecting a command position and an actual position;
   (b2) calculating a position deviation and a speed deviation based on the command position and the actual position thus detected; and
   (b3) calculating the control output based on the position deviation and the speed deviation thus calculated.

4. A sliding mode control method according to claim 3, wherein said step (b3) includes the steps of:
   (b4) calculating a value of the switching plane and a value of the integral element of the switching plane based on the calculated position deviation and the calculated speed deviation; and
   (b5) calculating the control output in accordance with respective positive or negative signs of the values of the switching plane and the integral element thus calculated.

# FIG.1

# FIG.2

# FIG.3

START

READ COMMAND POSITION θr AND ACTUAL POSITION θ ~100

CALCULATE POSITION DEVIATION $\varepsilon$ AND SPEED DEVIATION $\dot{\varepsilon}$ ~101

CALCULATE VALUE OF SWITCHING PLANE S ~102

103
$S \geqq 0$? NO

YES 104
$\varepsilon \geqq 0$? — NO (106)

110
$\varepsilon \geqq 0$? NO — 112

106 | R1←−$C^2 \cdot$Jmax$\cdot\varepsilon$

105 | R1←−$C^2 \cdot J_0 \cdot \varepsilon$

111 | R1←−$C^2 \cdot$Jmax$\cdot\varepsilon$

112 | R1←−$C^2 \cdot J_0 \cdot \varepsilon$

107
$(\dot{\varepsilon} + C \cdot \varepsilon) \geqq 0$ ? NO (109)

113
$(\dot{\varepsilon} + C \cdot \varepsilon) \geqq 0$ ? NO (115)

109 | R2←−[Jmax$\cdot$(D$\cdot$C+D$^2$) −$J_0 \cdot \omega c \cdot$D ]

108 | R2←−[$J_0 \cdot$(D$\cdot$C+D$^2$) −$J_0 \cdot \omega c \cdot$D]

114 | R2←−[Jmax$\cdot$(D$\cdot$C+D$^2$) −$J_0 \cdot \omega c \cdot$D ]

115 | R2←−[$J_0 \cdot$(D$\cdot$C+D$^2$) −$J_0 \cdot \omega c \cdot$D ]

T1 = R1+R2 ~116

$T = J_0 \cdot \omega c \cdot \dot{\varepsilon} + J_0 \cdot \omega c \cdot C \cdot \varepsilon + T1$ ~117

CURRENT CONTROL LOOP PROCESSING ~118

END

# INTERNATIONAL SEARCH REPORT

International Application No PCT/JP90/00601

**I. CLASSIFICATION OF SUBJECT MATTER (if several classification symbols apply, indicate all)**

According to International Patent Classification (IPC) or to both National Classification and IPC

Int. Cl$^5$   G05D3/12, G05B13/04

**II. FIELDS SEARCHED**

| Minimum Documentation Searched | |
|---|---|
| Classification System | Classification Symbols |
| IPC | G05D3/12, G05B13/04 |

| Documentation Searched other than Minimum Documentation to the Extent that such Documents are Included in the Fields Searched | |
|---|---|
| Jitsuyo Shinan Koho | 1961 – 1990 |
| Kokai Jitsuyo Shinan Koho | 1961 – 1990 |

**III. DOCUMENTS CONSIDERED TO BE RELEVANT**

| Category* | Citation of Document, with indication, where appropriate, of the relevant passages | Relevant to Claim No. |
|---|---|---|
| A | JP, B1, 45-8129 (Hitachi, Ltd.), 23 March 1970 (23. 03. 70), Line 37, column 4, page 2 to line 3, column 7, page 4 (Family: none) | 1 – 4 |
| A | JP, B2, 56-46603 (Siemens AG), 4 November 1981 (04. 11. 81), Line 14, column 4, page 2 to line 27, column 11, page 6 & BE, A1, 811524 & FR, A1, 2246904 & JP, A, 50-100473 & CH, A, 569321 & US, A, 3920965 & DE, C3, 2349725 & GB, A, 1442040 & FR, B1, 2246904 & SE, B, 399479 & CA, A1, 1029458 & SE, C, 399479 | 1 – 4 |

\* Special categories of cited documents:

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| July 27, 1990 (27. 07. 90) | August 13, 1990 (13. 08. 90) |
| International Searching Authority | Signature of Authorized Officer |
| Japanese Patent Office | |

Form PCT-ISA/210 (second sheet) (January 1985)